# EUROPÄISCHE PATENTSCHRIFT

(11) **EP 4 004 491 B1**
(45) Veröffentlichungstag und Bekanntmachung des Hinweises auf die Patenterteilung: **08.01.2025**
(21) Anmeldenummer: 20733798.1
(22) Anmeldetag: 18.06.2020
(51) Int. Cl.: G01C 21/30, G01C 21/00

(54) **VERFAHREN ZUR LOKALISIERUNG EINES FAHRZEUGS**
METHOD FOR LOCATING A VEHICLE
PROCÉDÉ DE LOCALISATION D'UN VÉHICULE

(30) Priorität: 25.06.2019 DE 102019209117
(43) Veröffentlichungstag der Anmeldung: 01.06.2022
(73) Patentinhaber: Continental Automotive GmbH, 30165 Hannover (DE)
(72) Erfinder: THIEL, Christian, 83080 Oberaudorf (DE); LIU, Dehao, Chengdu City, Sichuan Province 610039 (CN); QIN, Shi, Chengdu, 610000 (CN); GAO, Jun, Sichuan Province, 610041 (CN)
(74) Vertreter: Reddie & Grose LLP
(86) Internationale Anmeldenummer: PCT/EP2020/067002
(87) Internationale Veröffentlichungsnummer: WO 2020/260134

(56) Entgegenhaltungen:
- WO-A1-2018/191818
- US-A1- 2013 131 985
- US-A1- 2019 056 737
- ALEMPIJEVIC A ET AL: "An efficient algorithm for line extraction from laser scans", ROBOTICS, AUTOMATION AND MECHATRONICS, 2004 IEEE CONFERENCE ON SINGAPORE 1-3 DEC. 2004, PISCATAWAY, NJ, USA,IEEE, US, vol. 2, 1 December 2004 (2004-12-01), pages 970 - 974, XP010805763, ISBN: 978-0-7803-8645-7

## Beschreibung

Die Erfindung betrifft ein Verfahren zur Lokalisierung eines Fahrzeugs, das es ermöglicht, die Position des Fahrzeugs im Fahrzeug selbst zu ermitteln.

US 2019/056737 A1 beschreibt ein Fahrzeug, ein System und ein Verfahren zum Betrieb des Fahrzeugs.

Der Artikel von ALEMPIJEVIC A ET AL: mit dem Titel "An efficient algorithm for line extraction from laser scans", publiziert in ROBOTICS, AUTOMATION AND MECHATRONICS, 2004 IEEE, CONFERENCE ON SINGAPORE 1-3 DEC. 2004, PISCATAWAY, NJ, USA,IEEE, US, beschreibt einen Algorithmus zur Linienextraktion aus Laserscans.

US 2013/131985 A1 beschreibt ein tragbares elektronisches Bilderfassungs- und -verarbeitungssystem (oder ein System zur Verbesserung des Sehvermögens), das sehbehinderte Personen durch ihre Umgebung führt und dem Benutzer Informationen über interessante Objekte in der Nähe, potenziell gefährliche Hindernisse, ihren Standort und mögliche Wege zu ihrem Ziel liefert.

WO 2018/191818 A1 beschreibt Systeme und Verfahren für ein autonomes, selbstfahrendes Materialtransportfahrzeug mit einer Kartierung einer Industrieanlage.

Eine exakte Positionsbestimmung eines Fahrzeugs ist in vielen Anwendungsgebieten der modernen Telematik, beispielsweise beim autonomen Fahren beziehungsweise Navigieren und beim Einsatz von komplexen Fahrerassistenzsystemen, von großer Bedeutung. Zur autonomen Fahrzeuglokalisierung in einem Fahrzeug selbst ist es erforderlich, die eigentliche Fahrzeugposition als auch die Bewegungsrichtung des Fahrzeugs mit hoher Genauigkeit anzugeben beziehungsweise zu schätzen. Insbesondere beim autonomen Fahren werden neben den hohen Genauigkeitsanforderungen auch hohe Anforderungen an die Robustheit eines Lokalisierungsverfahrens gestellt. Für die Lokalisierungsgenauigkeit werden üblicherweise Anforderungen im Zentimeterbereich gestellt.

Es gibt derzeit einige computerbasierte Bildverarbeitungsverfahren, wie beispielsweise das Perspektivische-n-Punkt(Perspective-n-Point)-Verfahren, mit denen sich ein computerbasiertes Sehen mit hoher Genauigkeiten realisieren lässt. Allerdings müssen dafür strenge Randbedingungen erfüllt sein. Beispielsweise ist es erforderlich, dass eine mit hoher Genauigkeit erstellte Datenbank, deren Daten ein Modell einer Umgebung des Fahrzeugs repräsentieren, zur Verfügung steht. Des Weiteren ist es für die meisten Lokalisierungsverfahren und Lokalisierungssysteme erforderlich, dass in der Umgebung des Fahrzeugs deutliche Strukturen/Texturen sichtbar sind. Des Weiteren muss eine Datenzuordnung ausreichend gut sein, wobei die Datenzuordnung das Verhältnis zwischen tatsächlich visuell beobachteten Objekten/Merkmalen der Umgebung und Objekten/Merkmalen, die durch die Datenbank abgebildet werden, angibt.

Insbesondere in einigen kritischen Fällen zeigen die bisher bekannten Lokalisierungs-Systeme und -Verfahren bei Verwendung einer vorher erstellten Datenbank Schwächen. Die Leistungsfähigkeit von bekannten Lokalisierungs-Systemen und -Verfahren ist von der Qualität einer zuvor erstellten Datenbank, die ein Modell der Umgebung eines Fahrzeugs enthält, abhängig. Wenn die Daten der Datenbank nur geringfügig fehlerbehaftet sind, sind die bekannten Lokalisierungs-Systeme und -Verfahren anfällig für fehlerhafte Positionsbestimmungen, so dass die tatsächliche Fahrspur eines Fahrzeugs verloren wird. Des Weiteren versagen bekannte Lokalisierungs-Systeme und -Verfahren insbesondere dann, wenn sich die tatsächliche Umgebungsszenerie seit der Erstellung der Datenbank mit dem Modell der Umgebung verändert hat.

Ein Anliegen der vorliegenden Erfindung ist es, ein Verfahren zur Lokalisierung eines Fahrzeugs bereitzustellen, das auch dann zuverlässige Positionierungsergebnisse liefert, wenn eine von einem Server zur Verfügung gestellte Datenbank Ungenauigkeiten in der Beschreibung des Modells der Umgebung des Fahrzeugs enthält.

Eine Ausführungsform eines Verfahrens, das eine präzise Lokalisierung eines Fahrzeugs auch bei einer fehlerbehafteten Datenbank mit Daten eines Umgebungsmodells des Fahrzeugs ermöglicht, ist im Patentanspruch 1 angegeben.

Gemäß dem Verfahren zur Lokalisierung eines Fahrzeugs wird zunächst geprüft, ob eine externe Datenbank, die von einem externen Server erstellt worden ist und deren Daten ein Modell einer Umgebung des Fahrzeugs repräsentieren, in dem Fahrzeug zur Lokalisierung des Fahrzeugs zur Verfügung steht. Wenn festgestellt worden ist, dass die externe Datenbank in dem Fahrzeug tatsächlich zur Verfügung steht, wird in einem nächsten Schritt geprüft, ob die externe Datenbank zur Lokalisierung des Fahrzeugs verwendbar ist.

Wenn festgestellt worden ist, dass die externe Datenbank zur Lokalisierung des Fahrzeugs verwendbar ist, wird das Fahrzeug lokalisiert, indem eine Position des Fahrzeugs verwendet wird, die mit Hilfe der externen Datenbank ermittelt worden ist. Wenn hingegen festgestellt worden ist, dass die externe Datenbank zur Lokalisierung des Fahrzeugs nicht verwendbar ist, wird das Fahrzeug lokalisiert, indem die Position des Fahrzeugs mit Hilfe einer Karte der Umgebung des Fahrzeugs ermittelt wird, wobei diese Karte in dem Fahrzeug während der Fahrt des Fahrzeugs erstellt worden ist.

Gemäß dem vorgeschlagenen Verfahren kann die Lokalisierung des Fahrzeugs im Fahrzeug während der Fahrt somit auf zwei mögliche Arten erfolgen.

Falls von einem externen Server eine externe Datenbank mit Daten bereitgestellt wird, die ein genaues Modell der Umgebung des Fahrzeugs repräsentieren, kann die Lokalisierung des Fahrzeugs durch einen Steuerrechner des Fahrzeugs mittels der Datenbank erfolgen. Zur Lokalisierung des Fahrzeugs kann im Fahrzeug dazu ein optisches Verfahren eingesetzt werden, bei dem zunächst Objekte, die besonders gut aus einer Szenerie hervorstehen, erfasst werden. Mit einer Kamera im Fahrzeug wird zunächst ein Bild der Umgebung des Fahrzeugs aufgenommen. Bei der anschließenden Auswertung des Bildes im Fahrzeug werden Merkmalspunkte und/oder Objekte extrahiert und mit dem Umgebungsmodell, das von der externen Datenbank bereitgestellt wird, verglichen. Die Merkmalspunkte können zum Beispiel Kanten oder Ecken von Objekten in der Szene oder andere in der Szene herausstehende Bildbereiche beschreiben. Insbesondere werden die in dem aufgenommenen Bild identifizierten Merkmalspunkte und/oder Objekte mit Merkmalspunkten und/oder Objekten des Umgebungsmodells der externen Datenbank verglichen. Durch Abgleich der in dem aufgenommenen Bild der aktuellen Umgebung des Fahrzeugs aufgenommenen Merkmalspunkte und/oder Objekte mit den in dem Umgebungsmodell der Datenbank enthaltenen Merkmalspunkten und/oder Objekten lässt sich die Fahrzeugposition letztlich bestimmen.

Die angegebene Verfahrensvariante liefert allerdings nur dann korrekte Positionsdaten, wenn die von dem Server zur Verfügung gestellte externe Datenbank eine hohe Genauigkeit in Bezug auf die tatsächliche Umgebung des Fahrzeugs aufweist. Wenn daher von einem Steuerrechner des Fahrzeugs festgestellt wird, dass die Daten der von dem Server zur Verfügung gestellten externen Datenbank nicht oder nur unzureichend mit der realen Umgebung des Fahrzeugs zusammenpassen, wird erfindungsgemäß das Verfahren zur Lokalisierung des Fahrzeugs modifiziert.

In einem solchen Fall wird vorgeschlagen, in dem Fahrzeug selbst durch einen Steuerrechner des Fahrzeugs eine (dynamische) Karte der Umgebung des Fahrzeugs zu erstellen und die Position des Fahrzeugs mit Hilfe der im Fahrzeug selbst erstellten Karte zu ermitteln. Dazu werden mit Hilfe einer Fahrzeugkamera Bilder der Umgebung des Fahrzeugs aufgenommen und von dem Steuerrechner ausgewertet. Im Rahmen der Bildauswertung werden aus den aufgenommenen Bildern Merkmalspunkte und/oder Objekte extrahiert. Diese Merkmalspunkte und/oder Objekte werden während der Fahrt des Fahrzeugs für sämtliche aufgenommenen Bilder detektiert.

Mittels eines Matching-Verfahrens wird anschließend von dem Steuerrechner ermittelt, welche Merkmalspunkte und/oder Objekte in den nacheinander aufgenommenen Bildern miteinander korrespondieren. Anhand der korrespondierenden Merkmalspunkte und/oder Objekte in den aufgenommenen Bildern, kann während der Fahrt des Fahrzeugs von dem Steuerrechner eine dynamische Karte der Umgebung des Fahrzeugs erzeugt und ausgewertet werden, um die Position des Fahrzeugs zu ermitteln. Die (dynamische) Karte wird während ein und derselben Fahrt von dem Steuerrechner erstellt und abgeglichen und zur Lokalisierung der Position des Fahrzeugs ausgewertet.

Die Erfindung wird im Folgenden anhand von Figuren, die einen Verfahrensablauf des Verfahrens zum Lokalisieren eines Fahrzeugs verdeutlichen, näher erläutert.

Es zeigen:
Figur 1A ein Ablaufdiagramm zur Erläuterung einer ersten Ausführungsform eines Verfahrens zur Lokalisierung eines Fahrzeugs;
Figur 1B ein Ablaufdiagramm zur Erläuterung einer zweiten Ausführungsform eines Verfahrens zur Lokalisierung eines Fahrzeugs; und
Figur 2 verschiedene Schritte des Verfahrens zur Lokalisierung eines Fahrzeugs.

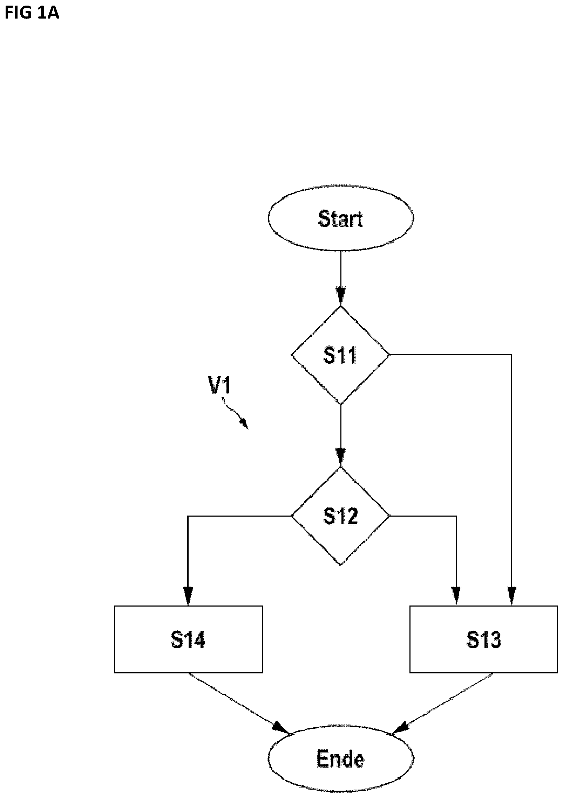

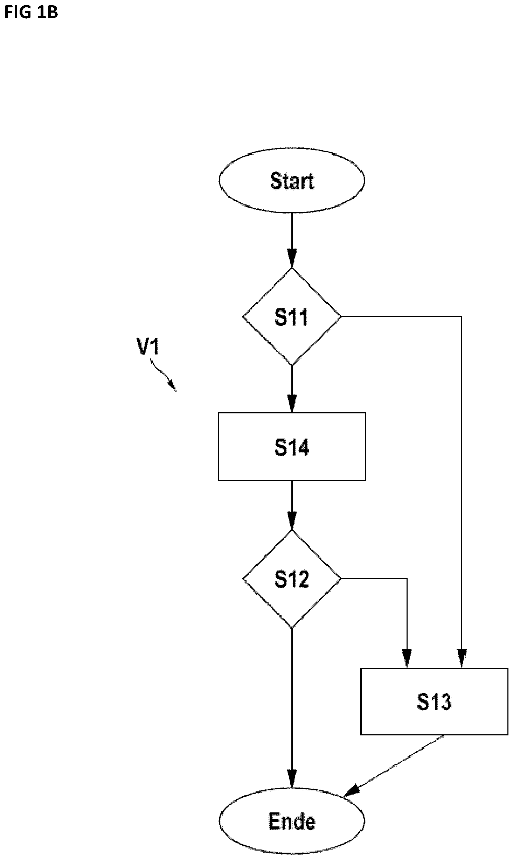

Die Figuren 1A und 1B erläutern jeweils eine Ausführungsform eines Verfahrens V1 zur Lokalisierung eines Fahrzeugs mit hoher Genauigkeit. Mit Hilfe der beiden angegebenen Ausführungsformen des Verfahrens kann die Position des Fahrzeugs selbst dann sehr genau ermittelt werden, wenn die von einem Server bereitgestellte externe Datenbank des Umgebungsmodells des Fahrzeugs fehlerbehaftet ist. Die einzelnen Verfahrensschritte werden mit Hilfe eines Steuerrechners, zum Beispiel mit Hilfe eines ADAS-Steuergeräts, im Fahrzeug ausgeführt.

Zunächst wird eine erste Ausführungsform des Verfahrens anhand der Figur 1A erläutert. In einem Verfahrensschritt S11 wird geprüft, ob eine externe Datenbank, die von einem externen Server erstellt worden ist und deren Daten ein Modell einer Umgebung des Fahrzeugs repräsentieren, in dem Fahrzeug zur Lokalisierung des Fahrzeugs zur Verfügung steht. Wenn festgestellt wird, dass die externe Datenbank in dem Fahrzeug zur Verfügung steht, wird in einem nachfolgenden Verfahrensschritt S12 geprüft, ob die externe Datenbank zur Lokalisierung des Fahrzeugs verwendbar ist.

Anschließend erfolgt das Lokalisieren des Fahrzeugs entweder in einem Schritt S13 durch Verwenden der Position des Fahrzeugs, die mit Hilfe einer Karte der Umgebung des Fahrzeugs, die in dem Fahrzeug während der Fahrt des Fahrzeugs erstellt worden ist, ermittelt worden ist, wenn zuvor in dem Verfahrensschritt S13 festgestellt worden ist, dass die externe Datenbank zur Lokalisierung des Fahrzeugs nicht verwendbar. Alternativ dazu kann das Lokalisieren des Fahrzeugs in einem Verfahrensschritt S14 durch Verwenden einer Position des Fahrzeugs, die mit Hilfe der externen Datenbank ermittelt worden ist, erfolgen, wenn zuvor in dem Verfahrensschritt S12 festgestellt worden ist, dass die externe Datenbank zur Lokalisierung des Fahrzeugs verwendbar ist.

Die von dem Server bereitgestellte externe Datenbank ist insbesondere dann nicht zur Positionsbestimmung verwendbar, wenn ein Datensatz der Datenbank nicht vollständig ist oder eine geringe Qualität aufweist. Des Weiteren ist die von dem Server bereitgestellte Datenbank nicht verwendbar, wenn die aktuelle Szene, in der sich das Fahrzeug befindet, nicht mit dem Umgebungsmodell der von dem Server bereitgestellten Datenbank übereinstimmt. Darüber hinaus ist die von dem Server zur Verfügung gestellte externe Datenbank nicht verwendbar, wenn die aktuelle Umgebung des Fahrzeugs nur wenige Strukturen beziehungsweise Texturen aufweist.

Wenn somit in dem Verfahrensschritt S11 festgestellt worden ist, dass eine externe Datenbank mit Daten, die die Umgebung des Fahrzeugs beschreiben, nicht vorhanden ist, wird in dem Verfahrensschritt S13 von einem Steuerrechner des Fahrzeugs eine (dynamische) Karte der Umgebung des Fahrzeugs während der Fahrt des Fahrzeugs erstellt. Anhand dieser im Fahrzeug erstellten Karte wird dann die Position des Fahrzeugs ermittelt. Gleichzeitig wird die (dynamische) Karte während der Fahrt aktualisiert. Das Erstellen der (dynamischen) Karte und die Lokalisierung des Fahrzeugs erfolgen somit nahezu parallel während derselben Fahrt.

Wenn im Verfahrensschritt S11 festgestellt worden ist, dass eine externe Datenbank, die von einem externen Server erstellt und an das Fahrzeug übertragen worden ist, im Fahrzeug zwar verfügbar ist, aber im Verfahrensschritt S12 festgestellt wird, dass die externe Datenbank zur Lokalisierung des Fahrzeugs nicht verwendbar ist, wird im Verfahrensschritt S13 ebenfalls eine (dynamische) Karte der Umgebung des Fahrzeugs während der Fahrt des Fahrzeugs erstellt und mit Hilfe dieser Karte die Position des Fahrzeugs ermittelt.

Wenn hingegen im Verfahrensschritt S11 festgestellt wird, dass eine externe Datenbank, die ein Umgebungsmodell des Fahrzeugs enthält, im Fahrzeug vorhanden ist und im Verfahrensschritt S12 festgestellt wird, dass diese externe Datenbank zur Lokalisierung des Fahrzeugs tatsächlich verwendbar ist, wird die Position des Fahrzeugs im Verfahrensschritt S14 mit Hilfe der externen Datenbank ermittelt.

Falls die Position des Fahrzeugs mit Hilfe der externen Datenbank ermittelt wird, wird im Verfahrensschritt S14 zunächst von einer Kamera des Fahrzeugs ein Bild der Umgebung des Fahrzeugs aufgenommen. Die in dem Bild vorhandenen Bilddaten werden mit Hilfe des Steuerrechners des Fahrzeugs im Fahrzeug ausgewertet und mit den Daten der externen Datenbank verglichen. Insbesondere werden im Verfahrensschritt S14 in dem aufgenommenen Bild Merkmalspunkte und/oder Objekte detektiert und extrahiert. Die in dem aufgenommenen Bild extrahierten Merkmalspunkte und/oder Objekte werden mit Merkmalspunkten und/oder Objekten, die aus der externen Datenbank ermittelt werden, abgeglichen, um zueinander korrespondierende Merkmalspunkte und/oder Objekte zu finden.

Die zueinander korrespondierenden Merkmalspunkte und/oder Objekte werden mittels eines Matching-Verfahrens gefunden. Nicht zueinander korrespondierende Merkmalspunkte und/oder Objekte beziehungsweise Ausreißer werden von dem Verfahren zur Lokalisierung des Fahrzeugs ausgeschlossen. Dazu kann beispielsweise ein Chi-Quadrat-Test verwendet werden.

Wenn die Position des Fahrzeugs mit Hilfe der (dynamischen) Karte, die im Fahrzeug im Verfahrensschritt S13 erstellt worden ist, ermittelt wird, werden während der Fahrt des Fahrzeugs von einer Fahrzeugkamera, beispielsweise einer Monokamera, aufeinanderfolgende Bilder der Umgebungsszenerie aufgenommen. Die in den Bildern vorhandenen Bilddaten werden anschließend mit Hilfe des Steuerrechners des Fahrzeugs im Fahrzeug ausgewertet. Insbesondere werden in den aufgenommenen Bildern Merkmalspunkte und/oder Objekte extrahiert und untereinander abgeglichen, um in den verschiedenen Bildern zueinander korrespondierende Merkmalspunkte und/oder Objekte zu finden. Bei den Merkmalspunkten kann es sich zum Beispiel um Kanten oder Ecken eines in der Umgebung des Fahrzeugs vorhandenen Objekts oder um herausstehende Bildbereiche handeln.

Die zueinander korrespondierenden Merkmalspunkte und/oder Objekte werden somit im Verfahrensschritt S13 ebenfalls durch ein Matching-Verfahren zwischen den zu verschiedenen Zeitpunkten während der Fahrt aufgenommenen Bildern ermittelt. Im Verfahrensschritt S13 wird von dem Steuerrechner des Fahrzeugs im Fahrzeug die (dynamische) Karte erstellt, indem für jeden der zueinander korrespondierenden Merkmalspunkte und/oder für jedes der zueinander korrespondierenden Objekte eine dreidimensionale Position in der Umgebung des Fahrzeugs ermittelt wird.

Mittels der detektierten Merkmalspunkte und/oder Objekte kann sowohl im Verfahrensschritt S13 also auch im Verfahrensschritt S14 die Position des Fahrzeugs mit hoher Präzision ermittelt werden.

Die in Figur 1B gezeigte zweite Ausführungsform des Verfahrens unterscheidet sich von der in Figur 1A gezeigten ersten Ausführungsform des Verfahrens dadurch, dass nach dem Verfahrensschritt S11 bereits der Verfahrensschritt S14 ausgeführt wird. In dem Verfahrensschritt S11 wird zunächst geprüft, ob eine externe Datenbank, die von einem externen Server erstellt worden ist und deren Daten ein Modell einer Umgebung des Fahrzeugs repräsentieren, in dem Fahrzeug zur Lokalisierung des Fahrzeugs zur Verfügung steht. Wenn festgestellt wird, dass in dem Fahrzeug keine externe Datenbank vorliegt, erfolgt das Lokalisieren des Fahrzeugs gemäß dem Verfahrensschritt S13. In diesem Fall wird die Position des Fahrzeugs mit Hilfe der (dynamischen) Karte, die in dem Fahrzeug während der Fahrt erstellt worden ist, ermittelt.

Wenn hingegen in dem Verfahrensschritt S11 festgestellt worden ist, dass die externe Datenbank in dem Fahrzeug zur Verfügung steht, wird in dem Verfahrensschritt S14 die Position des Fahrzeugs zunächst mit Hilfe der externen Datenbank ermittelt. Mit Hilfe der ermittelten Position wird anschließend in dem Verfahrensschritt S12 geprüft, ob die externe Datenbank zur Lokalisierung des Fahrzeugs verwendbar ist. Wenn bei der Prüfung im Verfahrensschritt S12 festgestellt worden ist, dass die externe Datenbank zur Lokalisierung des Fahrzeugs verwendbar ist, erfolgt das Lokalisieren des Fahrzeugs durch Verwenden der Position des Fahrzeugs, die zuvor im Verfahrensschritt S14 mit Hilfe der externen Datenbank ermittelt worden ist.

Die Position des Fahrzeugs wird insbesondere dann durch das Erstellen der Karte in dem Fahrzeug ermittelt, wenn im Verfahrensschritt S12 festgestellt wird, dass die zuvor im Verfahrensschritt S14 mit Hilfe der externen Datenbank ermittelte Position eine unzureichende Genauigkeit aufweist.

Wenn hingegen bei der Prüfung im Verfahrensschritt S12 festgestellt worden ist, dass die externe Datenbank zur Lokalisierung des Fahrzeugs nicht verwendbar ist, erfolgt im Verfahrensschritt S13 das Lokalisieren des Fahrzeugs durch Verwenden der Position des Fahrzeugs, die mit Hilfe der (dynamischen) Karte der Umgebung des Fahrzeugs, die in dem Fahrzeug während der Fahrt des Fahrzeugs erstellt worden ist, ermittelt worden ist.

Das Ermitteln der Position des Fahrzeugs mit Hilfe der Verfahrensschritte S13 oder S14 entspricht dem Verfahrensablauf, wie er anhand der Figur 1A für die Verfahrensschritte S13 und S14 erläutert worden ist.

Zu berücksichtigen ist, dass bei der ersten Ausführungsform des Verfahrens als auch bei der zweiten Ausführungsform des Verfahrens sowohl der Verfahrensschritt S13 als auch der Verfahrensschritt S14 eine relativ hohe Rechenzeit aufweisen. Wenn vorausgesetzt wird, dass sich das Fahrzeug während der Auswertung und Berechnungen der einzelnen Verfahrensschritte des Verfahrensablauf V1 weiter bewegt hat, lässt sich nicht exakt ermitteln, wo sich das Fahrzeug tatsächlich aktuell befindet. Es kann nur ermittelt werden, wo sich das Fahrzeug vor einer gewissen Zeit, das heißt zu Beginn der Rechenzeit für den Verfahrensablauf V1 befunden hat.

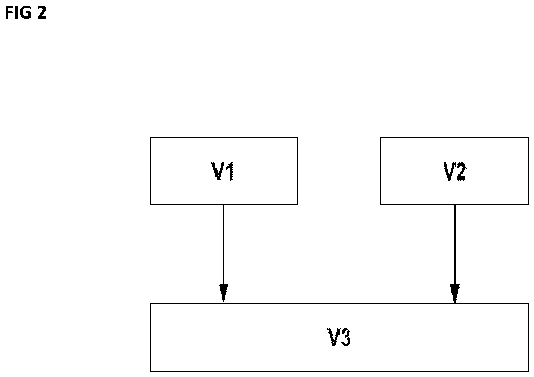

Der in den Figuren 1A und 1B dargestellte Verfahrensablauf V1 kann daher um die in Figur 2 dargestellten Verfahrensabläufe V2 und V3 erweitert werden. Das in Figur 2 um die Verfahrensabläufe V2 und V3 erweiterte Verfahren entspricht einer Koppelnavigation.

Im Verfahrensablauf V2 wird eine Bewegung beziehungsweise ein Bewegungszustand des Fahrzeugs durch Auswerten von Sensordaten, die von Fahrzeugsensoren des Fahrzeugs in dem Fahrzeug bereitgestellt werden, ermittelt. Dazu werden Daten von Fahrzeugsensoren, beispielsweise von Lenkradsensoren, Radsensoren oder einer inertialen Messeinheit ausgewertet. Ausgehend von einem bekannten Fixpunkt, der mit dem in Figur 1 angegebenen Verfahrensablauf V1 ermittelt worden ist, lässt sich eine weitere, aktuelle Position des Fahrzeugs durch Koppelnavigation in Abhängigkeit von der festgestellten Bewegung des Fahrzeugs ermitteln beziehungsweise schätzen. Mit Hilfe der Bewegung des Fahrzeugs lässt sich somit eine weitere, aktuelle Position des Fahrzeugs einschließlich einer Höheninformation näherungsweise ermitteln beziehungsweise schätzen.

Durch Vergleich der mit dem Verfahrensablauf V2 geschätzten Position und der mit dem Verfahrensablauf V1 exakt bestimmten Position kann ein Fehler der mittels der Koppelnavigation geschätzten Position ermittelt werden. Die mit Hilfe des Verfahrensablauf V2 näherungsweise ermittelte weitere Position kann unter Verwendung der Position des Fahrzeugs, die mit Hilfe der externen Datenbank oder mit Hilfe der in dem Fahrzeug erstellten Karte in dem Verfahrensablaufs V1 ermittelt worden ist, korrigiert werden. Zur Korrektur kann eine Kalman-Filterung eingesetzt werden.

## Patentansprüche

1. Verfahren zur Lokalisierung eines Fahrzeugs, umfassend:
- Prüfen (S11), ob eine externe Datenbank, die von einem externen Server erstellt worden ist und deren Daten ein Modell einer Umgebung des Fahrzeugs repräsentieren, in dem Fahrzeug zur Lokalisierung des Fahrzeugs zur Verfügung steht,
- Prüfen (S12), ob die externe Datenbank zur Lokalisierung des Fahrzeugs verwendbar ist, wenn zuvor festgestellt worden ist, dass die externe Datenbank in dem Fahrzeug zur Verfügung steht,
- Aufnehmen eines Bildes einer Umgebung des Fahrzeugs durch eine Kamera im Fahrzeug,
- Lokalisieren (S14) des Fahrzeugs durch Verwenden einer Position des Fahrzeugs, die mit Hilfe des aufgenommenen Bildes und der externen Datenbank ermittelt worden ist, wenn zuvor festgestellt worden ist, dass die externe Datenbank zur Lokalisierung des Fahrzeugs verwendbar ist, und Lokalisieren (S13) des Fahrzeugs durch Verwenden der Position des Fahrzeugs, die mit Hilfe des aufgenommenen Bildes und einer Karte der Umgebung des Fahrzeugs, die in dem Fahrzeug während der Fahrt des Fahrzeugs erstellt worden ist, wenn zuvor festgestellt worden ist, dass die externe Datenbank zur Lokalisierung des Fahrzeugs nicht verwendbar ist.

2. Verfahren nach Anspruch 1, wobei die Position des Fahrzeugs durch das Erstellen der Karte in dem Fahrzeug ermittelt wird, wenn festgestellt wird, dass die mit Hilfe der externen Datenbank ermittelte Position eine unzureichende Genauigkeit aufweist.

3. Verfahren nach einem der Ansprüche 1 oder 2, wobei die vom Server bereitgestellte externe Datenbank dann nicht zur Positionsbestimmung verwendbar ist, wenn ein Datensatz der Datenbank nicht vollständig ist.

4. Verfahren nach einem der Ansprüche 1 bis 3, wobei die Position des Fahrzeugs durch das Erstellen der Karte in dem Fahrzeug ermittelt wird, wenn festgestellt worden ist, dass die Umgebung des Fahrzeugs nicht mit dem Modell der Umgebung, das durch die Daten der externen Datenbank repräsentiert wird, übereinstimmt.

5. Verfahren nach einem der Ansprüche 1 bis 4, wobei die Position des Fahrzeugs durch das Erstellen der Karte in dem Fahrzeug ermittelt wird, wenn festgestellt worden ist, dass die Umgebung des Fahrzeugs keine oder weniger als eine vordefinierte Anzahl von Texturen aufweist.

6. Verfahren nach einem der Ansprüche 1 bis 5, wobei die Position des Fahrzeugs mit Hilfe der externen Datenbank ermittelt wird, indem in dem Bild vorhandene Bilddaten ausgewertet und mit den Daten der externen Datenbank verglichen werden.

7. Verfahren nach Anspruch 6, wobei in dem aufgenommenen Bild Merkmalspunkte und/oder Objekte extrahiert werden und mit Merkmalspunkten und/oder Objekten, die aus der externen Datenbank ermittelt werden, abgeglichen werden, um in dem aufgenommenen Bild und in der externen Datenbank zueinander korrespondierende Merkmalspunkte und/oder Objekte zu finden.

8. Verfahren nach Anspruch 7, wobei nicht zueinander korrespondierende Merkmalspunkte und/oder Objekte von dem Verfahren zur Lokalisierung des Fahrzeugs ausgeschlossen werden.

9. Verfahren nach einem der Ansprüche 1 bis 8, wobei die Karte in dem Fahrzeug erstellt wird, indem während der Fahrt des Fahrzeugs aufeinanderfolgende Bilder von einer Kamera des Fahrzeugs aufgenommen werden und in den Bildern vorhandene Bilddaten ausgewertet werden.

10. Verfahren nach Anspruch 9, wobei in den aufgenommenen Bildern Merkmalspunkte und/oder Objekte extrahiert werden und untereinander abgeglichen werden, um in den aufgenommenen Bildern zueinander korrespondierende Merkmalspunkte und/oder Objekte zu finden.

11. Verfahren nach Anspruch 10, wobei die Karte in dem Fahrzeug erstellt wird, indem für jeden der zueinander korrespondierenden Merkmalspunkte und/oder für jedes der zueinander korrespondierenden Objekte eine dreidimensionale Position in der Umgebung des Fahrzeugs ermittelt wird.

12. Verfahren nach einem der Ansprüche 1 bis 11, umfassend:
- Ermitteln einer Bewegung des Fahrzeugs durch Auswerten von Sensordaten, die von Fahrzeugsensoren des Fahrzeugs in dem Fahrzeug bereitgestellt werden,
- Ermitteln einer weiteren Position des Fahrzeugs in Abhängigkeit von der ermittelten Bewegung des Fahrzeugs.

13. Verfahren nach Anspruch 12, ferner umfassend:
- Korrigieren der ermittelten weiteren Position des Fahrzeugs unter Verwendung der Position des Fahrzeugs, die mit Hilfe der externen Datenbank oder der in dem Fahrzeug erstellten Karte ermittelt worden ist.

## Claims

1. A method for locating a vehicle, comprising:
- checking (S11) whether an external database which has been created by an external server and whose data represent a model of an environment of the vehicle is available in the vehicle for locating the vehicle,
- checking (S12) whether the external database can be used to locate the vehicle if it has previously been determined that the external database is available in the vehicle,
- capturing an image of an environment of the vehicle by a camera in the vehicle,
- locating (S14) the vehicle by using a position of the vehicle determined by means of the captured image and the external database, if it has been previously determined that the external database can be used for locating the vehicle, and locating (S13) the vehicle by using the position of the vehicle which by means of the captured image and a map of the environment of the vehicle created in the vehicle while the vehicle is moving, if it has been previously determined that the external database cannot be used for locating the vehicle.

2. The method according to claim 1,
wherein the position of the vehicle is determined by creating the map in the vehicle when it is determined that the position determined by means of the external database has insufficient accuracy.

3. The method according to any one of claims 1 or 2,
wherein the external database provided by the server cannot be used to determine the position if a data set of the database is not complete.

4. The method according to any one of claims 1 to 3,
wherein the position of the vehicle is determined by creating the map in the vehicle when it has been determined that the environment of the vehicle does not match the model of the environment represented by the data of the external database.

5. The method according to any one of claims 1 to 4,
wherein the position of the vehicle is determined by creating the map in the vehicle when it has been determined that the environment of the vehicle has no or less than a predefined number of textures.

6. A method according to any one of claims 1 to 5,
wherein the position of the vehicle is determined by means of the external database by evaluating image data present in the image and comparing it with the data in the external database.

7. The method according to claim 6,
wherein feature points and/or objects are extracted in the captured image and compared with feature points and/or objects determined from the external database in order to find feature points and/or objects corresponding to one another in the captured image and in the external database.

8. The method according to claim 7,
wherein feature points and/or objects which do not correspond to each other are excluded from the method for locating the vehicle.

9. The method according to any one of claims 1 to 8,
wherein the map is created in the vehicle by capturing successive images from a camera of the vehicle while the vehicle is moving and evaluating image data present in the images.

10. The method according to claim 9,
wherein feature points and/or objects are extracted from the captured images and compared with each other in order to find feature points and/or objects in the captured images which correspond to one another.

11. The method according to claim 10,
wherein the map is created in the vehicle by determining a three-dimensional position in the environment of the vehicle for each of the feature points corresponding to one another and/or for each of the objects corresponding to one another.

12. The method according to any one of claims 1 to 11, comprising:
- determining a movement of the vehicle by evaluating sensor data provided by vehicle sensors of the vehicle in the vehicle,
- determining a further position of the vehicle depending on the determined movement of the vehicle.

13. The method of claim 12, further comprising:
- correcting the determined further position of the vehicle using the position of the vehicle determined by means of the external database or the map created in the vehicle.

## Revendications

1. Procédé de localisation d'un véhicule, comprenant :
- le fait d'opérer une vérification (S11) pour savoir si une base de données externe, qui a été créée par un serveur externe et dont les données représentent un modèle d'un environnement du véhicule, est disponible dans le véhicule pour la localisation du véhicule,
- le fait d'opérer une vérification (S12) pour savoir si la base de données externe est utilisable pour la localisation du véhicule lorsqu'il a été constaté au préalable que la base de données externe est disponible dans le véhicule,
- le fait de prendre une image de l'environnement du véhicule par une caméra située dans le véhicule,
- le fait de localiser (S14) le véhicule en utilisant une position du véhicule, qui a été déterminée à l'aide de l'image enregistrée et de la base de données externe lorsqu'il a été constaté au préalable que la base de données externe peut être utilisée pour la localisation du véhicule, et le fait de localiser (S13) le véhicule en utilisant la position du véhicule, qui a été déterminée à l'aide de l'image enregistrée et d'une carte d'un environnement du véhicule, qui a été créée dans le véhicule pendant le trajet du véhicule, lorsqu'il a été constaté au préalable que la base de données externe ne peut pas être utilisée pour la localisation du véhicule.

2. Procédé selon la revendication 1, dans lequel la position du véhicule est déterminée en créant la carte dans le véhicule lorsqu'il est constaté que la position déterminée à l'aide de la base de données externe présente une précision insuffisante.

3. Procédé selon l'une quelconque des revendications 1 ou 2, dans lequel la base de données externe fournie par le serveur ne peut pas alors être utilisée pour définir la position lorsqu'un ensemble de données de la base de données n'est pas complet.

4. Procédé selon l'une quelconque des revendications 1 à 3, dans lequel la position du véhicule est déterminée en créant la carte dans le véhicule lorsqu'il a été constaté que l'environnement du véhicule ne concorde pas avec le modèle de l'environnement, qui est représenté par les données de la base de données externe.

5. Procédé selon l'une quelconque des revendications 1 à 4, dans lequel la position du véhicule est déterminée en créant la carte dans le véhicule lorsqu'il a été constaté que l'environnement du véhicule ne présente aucune texture ou un nombre inférieur à un nombre prédéfini de textures.

6. Procédé selon l'une quelconque des revendications 1 à 5, dans lequel la position du véhicule est déterminée à l'aide de la base de données externe en ce que des données d'image présentes sur l'image sont évaluées et sont comparées aux données de la base de données externe.

7. Procédé selon la revendication 6, dans lequel des points de caractéristique et/ou des objets sont extraits sur l'image enregistrée et sont mis en regard avec des points de caractéristique et/ou des objets qui sont déterminés à partir de la base de données externe pour trouver des points de caractéristique et/ou des objets correspondant les uns aux autres sur l'image enregistrée et dans la base de données externe.

8. Procédé selon la revendication 7, dans lequel des points de caractéristique et/ou des objets ne correspondant pas les uns aux autres sont exclus du procédé de localisation du véhicule.

9. Procédé selon l'une quelconque des revendications 1 à 8, dans lequel la carte est créée dans le véhicule en ce que pendant le trajet du véhicule, des images successives sont enregistrées par une caméra du véhicule et des données d'image présentes sur les images sont évaluées.

10. Procédé selon la revendication 9, dans lequel des points de caractéristique et/ou des objets sont extraits dans les images enregistrées et sont mis en regard entre eux pour trouver des points de caractéristique et/ou des objets correspondant les uns aux autres sur les images enregistrées.

11. Procédé selon la revendication 10, dans lequel la carte est créée dans le véhicule en ce qu'une position tridimensionnelle dans l'environnement du véhicule est déterminée pour chacun des points de caractéristique correspondant les uns aux autres et/ou pour chacun des objets correspondant les uns aux autres.

12. Procédé selon l'une quelconque des revendications 1 à 11, comprenant :
- la détermination d'un déplacement du véhicule en évaluant des données de capteur, qui sont fournies par des capteurs de véhicule du véhicule dans le véhicule,
- la détermination d'une autre position du véhicule en fonction du déplacement déterminé du véhicule.

13. Procédé selon la revendication 12, comprenant en outre :
- la correction de l'autre position déterminée du véhicule en utilisant la position du véhicule qui a été déterminée à l'aide de la base de données externe ou de la carte créée dans le véhicule.
